# EUROPEAN PATENT APPLICATION

(11) **EP 4 787 750 A1**
(43) Date of publication of application: **05.08.2026**
(21) Application number: 26154969.5
(22) Date of filing: 29.01.2026
(51) Int. Cl.: H04L 1/00

(54) **METHOD AND DEVICE FOR PROCESSING FRAMES INCLUDING INTERMEDIATE FRAME CHECK SEQUENCES**

(30) Priority: 31.01.2025 US 202563752461 P; 31.12.2025 US 202519437623
(71) Applicant: Samsung Electronics Co., Ltd., Suwon-si, Gyeonggi-do 16677 (KR)
(72) Inventor: RISON, Mark Gorthorn, San Jose, CA, 95134 (US); KOUNDOURAKIS, Michail, San Jose, CA (US); MA, Yongsen, San Jose, CA, 95134 (US); KANDALA, Srinivas, San Jose, CA, 95134 (US)
(74) Representative: Kuhnen & Wacker Patent- und Rechtsanwaltsbüro PartG mbB

(57) **Abstract**

A method of processing a frame in a wireless communication device is provided. The method includes: receiving (301), by the wireless communication device, the frame, the frame including a first user information field; detecting (302), by the wireless communication device and based on information contained in the first user information field, whether the frame includes an intermediate frame check sequence, IFCS, and whether location information for the IFCS is available; when the location information for the IFCS is available, determining (304), by the wireless communication device and based on the location information contained in a user information field following a common information field of the frame, a position of one or more additional user information fields that include the IFCS; and when the location information for the IFCS is available, verifying (306), by the wireless communication device, the IFCS based on the one or more additional user information fields.

## Description

### TECHNICAL FIELD

The disclosure generally relates to wireless communication systems. More particularly, the subject matter disclosed herein relates to improvements to communication protocols and data transmission techniques involving intermediate frame check sequences (IFCSs).

### SUMMARY

Wireless communication systems may transmit information using frames that include control and data portions associated with one or more user devices. To maintain reliable transmission, such systems may employ error-detection mechanisms, for example, a frame check sequence (FCS) appended to the end of a frame, which allows a receiving device to verify the integrity of the received data.

Many systems use a single FCS that covers an entire frame. Additionally, alternative techniques have proposed that utilize segmented or partial integrity checks to enable earlier error detection or to identify corrupted sections of a frame.

However, using a single end-of-frame check delays error detection until after the complete frame is received, and segmented or ad-hoc integrity approaches often introduce additional signaling or require non-standard frame structures, thereby increasing overhead and reducing compatibility with existing communication protocols.

To overcome these types of issues, systems and methods are described herein for providing IFCSs within a wireless communication frame.

In certain embodiments, a first user information field includes an indication of whether the frame carries an IFCS and location information identifying one or more user information fields that contain the IFCS. A receiving device can detect this indication, determine the IFCS position, and verify the corresponding frame portion before the entire frame is processed.

The above approaches improve on previous methods because they enable early and selective integrity verification without altering legacy frame handling for devices that do not support IFCS, thereby enhancing reliability and reducing processing latency while maintaining backward compatibility with existing communication protocols.

In an embodiment, a method of processing a frame in a wireless communication device comprises: receiving, by the wireless communication device, the frame, the frame including a first user information field; detecting, by the wireless communication device and based on information contained in the first user information field, whether the frame includes an IFCS and whether location information for the IFCS is available; when the location information for the IFCS is available, determining, by the wireless communication device and based on the location information contained in a user information field following a common information field of the frame, a position of one or more additional user information fields that include the IFCS; when the location information for the IFCS is available, verifying, by the wireless communication device, the IFCS based on the one or more additional user information fields; and based on a result of the verifying, performing further processing of the frame or discarding the frame.

In an embodiment, a wireless communication device comprises a receiver configured to receive a frame, the frame including a first user information field; and a controller configured to: detect, based on information contained in the first user information field, whether the frame includes an IFCS, determine, based on location information contained in the first user information field, a position of one or more additional user information fields that include the IFCS, and verify the IFCS based on the one or more additional user information fields.

In an embodiment, a frame for wireless communication comprises a common information field; and one or more user information fields following the common information field, wherein a first user information field includes: an association identifier (AID) value indicating that the frame includes an IFCS; and location information indicating a position of one or more additional user information fields that include the IFCS, or indicating that the IFCS is included within the first user information field.

In an embodiment, a method of transmitting a frame in a wireless communication device comprises: constructing a frame including a common information field and one or more user information fields; generating an IFCS for a portion of the frame; including the IFCS either immediately after the common information field or in one or more user information fields at a position indicated by a user information field following the common information field; and transmitting the frame to another wireless communication device.

### BRIEF DESCRIPTION OF THE DRAWING

In the following section, the aspects of the subject matter disclosed herein will be described with reference to exemplary embodiments illustrated in the figures, in which:
FIG. 1 illustrates a format of a wireless communication frame including a media access control (MAC) header, a common information field, and a plurality of user information fields, one or more of which include portions of an IFCS, according to an embodiment;
FIG. 2 illustrates another format of a wireless communication frame including a MAC header, a common information field, and a plurality of user information fields, where one or more of the user information fields positioned toward an end of the frame include portions of an IFCS, according to an embodiment;
FIG. 3 illustrates a method of processing a wireless communication frame in a wireless communication device, including detecting, determining, and verifying an IFCS based on information contained in a user information field of the frame, according to an embodiment;
FIG. 4 is a block diagram of an electronic device in a network environment, the electronic device being configured to process a wireless communication frame including an IFCS, according to an embodiment; and
FIG. 5 shows a system including a station (STA) and an access point (AP) in communication with each other, where the STA is configured to process a wireless communication frame including an IFCS, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

"Frame" as used herein may refer to a unit of data transmitted over a wireless communication medium, including, e.g., a header, one or more information fields, and one or more integrity-check portions. Some examples of "frame" may include a management frame or a control frame defined in IEEE 802.11 standards, such as a Trigger frame, or a data frame that includes a frame check sequence (FCS) and is carried in a physical-layer transmission.

"User information (User Info) field" as used herein may refer to a portion of a wireless communication frame that carries information associated with an individual user or station (STA). Each user information field may include control parameters, identifiers, scheduling data, or other information used for uplink or downlink coordination. Some examples of "user information field" may include a field in a Trigger frame specifying an Association Identifier (AID), resource allocation parameters, modulation and coding scheme (MCS) information, or, in certain embodiments, bits of an IFCS or an offset value indicating the IFCS location.

"Common information field" as used herein may refer to a portion of a wireless communication frame that carries control information applicable to multiple or all user STAs addressed by the frame. The common information field typically precedes one or more user information fields and provides parameters that define or coordinate transmission behavior for the associated users. Some examples of "common information field" may include a field in a Trigger frame specifying trigger type, channel or resource allocation parameters, spatial reuse information, or timing and scheduling indicators shared among the users.

"Intermediate frame check sequence (IFCS)" as used herein may refer to an error-detection code included within a frame at a position other than the end of the frame, and configured to verify the integrity of a portion of the frame prior to full reception of the entire frame. The IFCS may be computed over one or more preceding fields of the frame while excluding the field or fields that carry the IFCS itself. Some examples of "intermediate frame check sequence (IFCS)" may include a cyclic redundancy check (CRC) value inserted between user information fields of a Trigger frame, or an intermediate integrity code positioned within a data or control frame to enable early or segmented verification by a receiving device.

"Association identifier (AID)" as used herein may refer to a numerical identifier assigned by an access point (AP) to a STA to distinguish the STA within a basic service set (BSS) or during communication exchanges. The AID may be included in user information fields of a frame to identify an intended recipient or to convey special signaling related to that recipient. Some examples of "association identifier (AID)" may include a 12-bit field value specified in IEEE 802.11 standards for Trigger frames, such as an AID value identifying a particular user, an AID value reserved for broadcast or group addressing, or a designated AID value indicating the presence or location of an IFCS.

"Offset" as used herein may refer to information indicating a position of a particular field or data element within a frame relative to a predefined reference point, such as the start of the frame or a preceding field. In the embodiments described herein, the offset may specify the position or boundary of one or more user information fields that include an IFCS. Some examples of "offset" may include a value representing a byte or octet index of a last user information field in the frame, a count of user information fields preceding an IFCS field, or a pointer indicating where frame padding or integrity verification should begin or end.

"Check value" as used herein may refer to a computed integrity value derived from one or more portions of a frame to verify data correctness. The check value may be generated using an error-detection algorithm, such as a CRC, parity computation, or other polynomial-based checksum. Some examples of "check value" may include a CRC result calculated over selected portions of a wireless communication frame, excluding one or more user information fields that carry an IFCS, or a partial integrity code used by a receiving device to confirm that a segment of the frame has been correctly received prior to processing the entire frame.

The embodiments described herein relate to techniques for improving the integrity verification of wireless communication frames. In these embodiments, a frame, such as a Trigger frame, may include one or more user information fields that may carry an IFCS in addition to an end-of-frame check. Certain user information fields may include identification and location information indicating the presence and position of the IFCS within the frame. A receiving device can interpret this information to detect whether an IFCS is present and determine where within the frame the IFCS is located.

By providing this indication within the existing frame structure, a receiving device can verify portions of a frame earlier in the reception process or selectively check specific sections without waiting for the entire frame to be received. This capability enhances data integrity and error detection while maintaining backward compatibility with devices and protocols that use a single end-of-frame check. The described techniques may be implemented in wireless communication devices, APs, or network systems that transmit and receive frames including an IFCS.

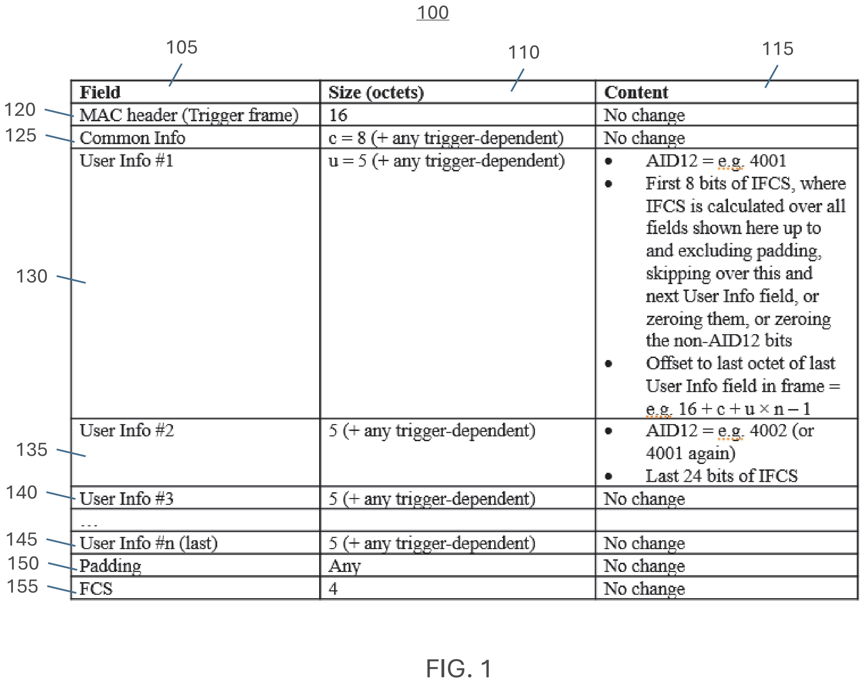

FIG. 1 illustrates an example of a wireless communication frame format according to an embodiment. The frame 100 is presented in tabular form with three columns: a Field column 105, a Size (octets) column 110, and a Content column 115. Each row of the table corresponds to a portion of the frame 100 and identifies the size and content associated with that portion.

As shown in FIG. 1, a first row 120 corresponds to a MAC header of a Trigger frame, which may include information identifying a frame type, duration, and addressing fields. The MAC header may have a size of sixteen octets and remains unchanged relative to existing frame formats. A second row 125 corresponds to a Common Info field that provides control information common to all user devices. The Common Info field may have a nominal size of eight octets plus any trigger-dependent extensions and likewise remains unchanged.

A third row 130 represents a first User Info field, which may have a base size of five octets plus any trigger-dependent extensions. In this embodiment, the first User Info field includes an AID12 value, such as 4001, and may also carry the first eight bits of an IFCS. In other embodiments, the IFCS may be divided among User Info fields in different bit-length portions, or may be entirely contained within a single user information field. The IFCS may be computed over all fields of the frame up to and excluding padding, with the first and second User Info fields skipped or zeroed during the calculation. The first User Info field may further include an offset value indicating the position of a last octet of a User Info field in the frame, for example corresponding to a byte position equal to 16 + c + u × n - 1, where c and u denote the sizes of the Common Info and User Info fields, respectively, and n denotes the total number of User Info fields.

A fourth row 135 represents a second User Info field, which may also have a size of five octets plus any trigger-dependent portion. The second User Info field may include another AID12 value (for example, 4002 or 4001 again) and the remaining twenty-four bits of the IFCS. Together, the first User Info field and second User Info field collectively carry the entire thirty-two-bit IFCS.

A fifth row 140 corresponds to a third User Info field, which may have the same nominal size as the preceding User Info fields and remains unchanged. Additional rows, indicated by an ellipsis and represented collectively as row 145, correspond to further User Info fields (up to User Info #n), each also having a similar size, while carrying user-specific information according to its respective function.

A subsequent row 150 corresponds to a Padding field, which may be of variable length and is used to align the frame to a desired boundary. A final row 155 corresponds to a Frame Check Sequence (FCS) field of four octets, which may provide an end-of-frame integrity check. The arrangement illustrated in FIG. 1 allows a portion of the integrity verification information to be positioned within the frame, rather than solely at its end, allowing intermediate integrity validation during reception while preserving compatibility with existing frame formats.

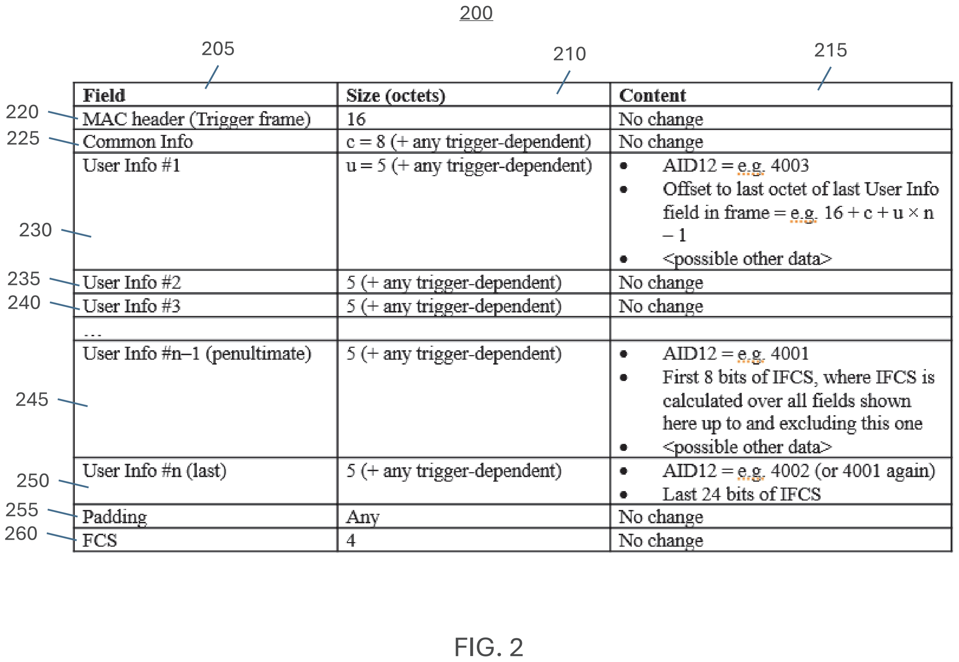

FIG. 2 illustrates another example of a wireless communication frame format according to an embodiment. The frame 200 is presented in tabular form with three columns: a Field column 205, a Size (octets) column 210, and a Content column 215. Each row in the table corresponds to a portion of the frame 200 and identifies the size and content associated with that portion.

As shown in FIG. 2, a first row 220 corresponds to a MAC header of a Trigger frame, which may include information identifying a frame type, duration, and addressing fields. The MAC header may have a size of sixteen octets and remains unchanged relative to existing frame formats. A second row 225 corresponds to a Common Info field that provides information common to all user devices. The Common Info field may have a nominal size of eight octets plus any trigger-dependent extensions and also remains unchanged.

A third row 230 represents a first User Info field, which may have a base size of five octets plus any trigger-dependent extensions. In this embodiment, the first User Info field includes an AID12 value, such as 4003, and an offset indicating the position of the last User Info field in the frame (e.g., 16 + c + u × n - 1, where c and u denote the sizes of the Common Info and User Info fields, respectively, and n denotes the total number of User Info fields). The first User Info field may also include other trigger-dependent information or reserved bits.

Rows 235 and 240 represent second and third User Info fields, each of which may have a size of five octets plus any trigger-dependent portion and remain unchanged relative to legacy frame formats.

A subsequent row 245 corresponds to a penultimate User Info field (User Info #n-1), which may include an AID12 value (e.g., 4001) and a portion of an IFCS, such as the first eight bits of the IFCS calculated over all preceding fields of the frame. The IFCS may be determined over all frame portions up to and excluding this field, skipping or zeroing appropriate bits as specified by implementation.

A following row 250 corresponds to the last User Info field (User Info #n), which may include another AID12 value (e.g., 4002 or 4001 again) and the remaining twenty-four bits of the IFCS. Together, the penultimate and last User Info fields 245 and 250 collectively carry the entire thirty-two-bit IFCS.

A next row 255 corresponds to a Padding field, which may be of variable length and used for byte alignment. A final row 260 corresponds to an FCS field of four octets, which provides an end-of-frame integrity check. The arrangement illustrated in FIG. 2 enables integrity information to be positioned toward the end of the frame, allowing intermediate verification of received data using only frame portions preceding the IFCS fields while preserving compatibility with existing frame structures.

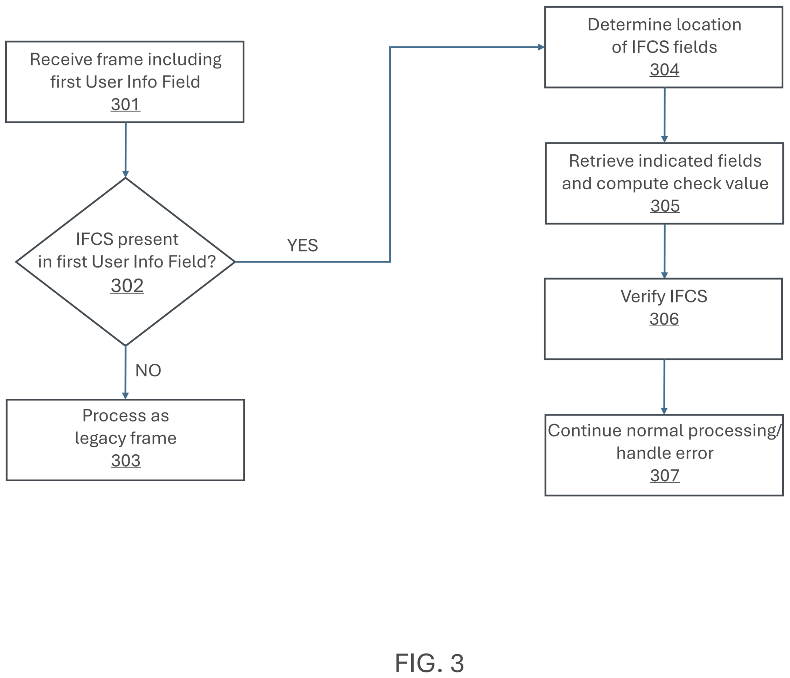

FIG. 3 is a flowchart illustrating a method performed by a wireless communication device (e.g., a station, STA) for processing a wireless communication frame, according to an embodiment. The method may be executed by a controller of the device while cooperating with a PHY to obtain portions of the frame as they are received from the wireless medium.

Step 301 (receive frame including a first User Info field). Here, the device may initiate reception of a frame and obtain, from the PHY, at least an initial portion of the frame sufficient to cover the MAC header and Common Info as well as the first User Info field. In one embodiment, the MAC may configure the PHY to deliver the first x octets, where x is chosen to include the MAC header (nominally 16 octets; see rows 120 and 220 in FIGS. 1 and 2), the Common Info field (size c octets plus any trigger-dependent extensions; see rows 125 and 225), and the base length u of the first User Info field (nominally 5 octets plus any trigger-dependent extensions; see rows 130 and 230). Thus, x may be expressed as x = 16 +c *+* u, with c and u determined from the applicable trigger format. The initial bytes obtained at Step 301 therefore include the first User Info field that carries the IFCS indicator and location information in the embodiments of FIGS. 1 and 2.

Step 302 (detect whether the frame includes an intermediate frame check sequence (IFCS)). In this step, after receiving the initial portion of the frame, the wireless communication device may analyze the contents of the first User Info field to determine whether an IFCS is present. In one embodiment, the device may examine the 12-bit AID12 subfield within this first User Info field (see rows 130 and 230 in FIGS. 1 and 2). Specific AID12 values, such as 4001 or 4003, act as identifiers indicating that the frame carries an IFCS either immediately following the Common Info field (see FIG. 1) or toward the end of the frame (see FIG. 2). When the AID12 value differs from these designated identifiers, the device can determine that no IFCS is included and that the frame conforms to a legacy format. The detection step thus provides the decision point for subsequent processing, i.e., either legacy handling or additional integrity verification, based on the signaling embedded within the first User Info field.

Step 303 (process as legacy frame if IFCS not indicated). In this step, when the information contained in the first User Info field does not indicate the presence of an IFCS, the wireless communication device may process the frame according to a legacy frame-handling procedure. In this case, the frame may be treated as a conventional Trigger frame or data frame containing only the final FCS for end-of-frame verification. The device may therefore bypass any intermediate integrity operations and proceed directly with normal MAC-layer processing, such as parsing subsequent User Info fields for scheduling, uplink resource allocation, or payload extraction. This conditional branching ensures backward compatibility, i.e., frames transmitted by legacy APs or devices that do not include IFCS support, or that do not include IFCS location indication support, can still be received and processed without error.

Step 304 (determine position of one or more additional User Info fields including the IFCS), In this step, when the *AID12*value or other indicator within the first User Info field identifies that an IFCS is present, the wireless communication device may determine the position of one or more additional User Info fields that carry the IFCS. As illustrated in FIGS. 1 and 2, this determination is based on location information, such as an offset value, encoded within the first User Info field. The offset may specify, for example, the position of the last octet of the final User Info field in the frame (e.g., 16 + c + u × (n-1), where c is the Common Info length and u is the User Info field size). Using this offset, the device can compute the byte range or field index corresponding to the User Info fields that contain portions of the IFCS. In one embodiment, when AID12 = 4001, the IFCS may be located immediately after the Common Info field (as shown in FIG. 1), whereas when AID12 = 4003, the IFCS may reside near the end of the frame (as shown in FIG. 2). This determination allows the device to identify which parts of the frame must be retrieved for verification in subsequent steps.

Step 305 (retrieve indicated fields and compute check value). In this step, once the positions of the User Info fields carrying the IFCS are determined, the wireless communication device may request and obtain those portions of the frame from the PHY layer. In one embodiment, the MAC configures the PHY to deliver additional octets covering the indicated User Info fields, or to signal an end-of-frame condition if the frame terminates earlier than expected. After receiving the required portions, the device may compute a check value (for example, a CRC or equivalent integrity code) over the appropriate segment of the frame. The segment may include all fields of the frame except those carrying the IFCS itself, such that the IFCS is excluded from the computation window. This check value represents the expected intermediate integrity result for the received frame segment and serves as the basis for comparison in the subsequent verification step.

Step 306 (verify the IFCS). In this step, the wireless communication device may compare the computed check value obtained in S305 with the IFCS retrieved from the one or more User Info fields identified in S304. A match between the computed value and the IFCS indicates that the frame segment up to the IFCS location was received without error. If the values do not match, the device determines that an integrity error has occurred within the covered portion of the frame. In certain embodiments, the verification may be implemented using the same CRC polynomial or generator function used for the end-of-frame FCS, thereby maintaining consistency with existing frame formats while allowing intermediate verification. The verification step ensures that corrupted data can be detected early, e.g., prior to full-frame reception, thereby reducing unnecessary processing and improving reliability in high-throughput or congested environments.

Step 307 (continue normal processing or handle verification error). Following the comparison in Step 306, the wireless communication device may proceed based on the verification outcome. When the computed check value matches the received IFCS, the device may resume normal MAC-layer frame processing, such as parsing any remaining User Info fields, extracting payload or scheduling data, updating receive statistics, or generating an acknowledgment (ACK/BA) response. This allows the verified portion of the frame to be used immediately, supporting low-latency and reliable operation. Conversely, when the comparison indicates a mismatch, the device may perform error handling, including discarding the corrupted frame, requesting retransmission, or flagging the event for higher-layer recovery. This decision step completes the intermediate integrity-verification process and returns the receiver to its standard operating flow for subsequent frames.

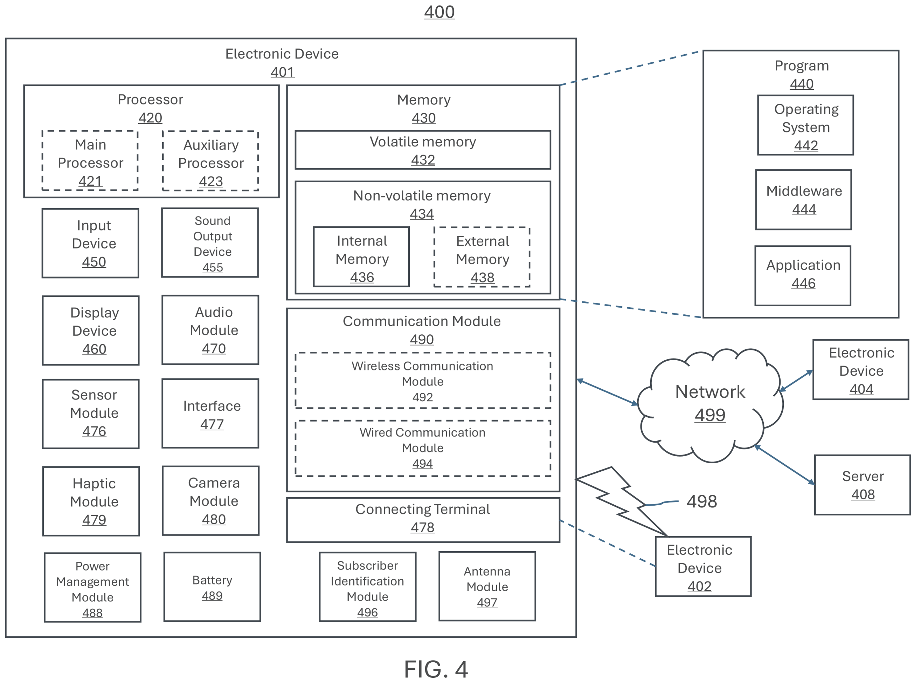

FIG. 4 is a block diagram of an electronic device in a network environment 400, the electronic device being configured to process a wireless communication frame including an IFCS, according to an embodiment.

Referring to FIG. 4, an electronic device 401 in a network environment 400 may communicate with an electronic device 402 via a first network 498 (e.g., a short-range wireless communication network), or an electronic device 404 or a server 408 via a second network 499 (e.g., a long-range wireless communication network). The electronic device 401 may communicate with the electronic device 404 via the server 408. The electronic device 401 may include a processor 420, a memory 430, an input device 450, a sound output device 455, a display device 460, an audio module 470, a sensor module 476, an interface 477, a haptic module 479, a camera module 480, a power management module 488, a battery 489, a communication module 490, a subscriber identification module (SIM) card 496, or an antenna module 497. In one embodiment, at least one (e.g., the display device 460 or the camera module 480) of the components may be omitted from the electronic device 401, or one or more other components may be added to the electronic device 401. Some of the components may be implemented as a single integrated circuit (IC). For example, the sensor module 476 (e.g., a fingerprint sensor, an iris sensor, or an illuminance sensor) may be embedded in the display device 460 (e.g., a display).

The processor 420 may execute software (e.g., a program 440) to control at least one other component (e.g., a hardware or a software component) of the electronic device 401 coupled with the processor 420 and may perform various data processing or computations.

As at least part of the data processing or computations, the processor 420 may load a command or data received from another component (e.g., the sensor module 476 or the communication module 490) in volatile memory 432, process the command or the data stored in the volatile memory 432, and store resulting data in non-volatile memory 434. The processor 420 may include a main processor 421 (e.g., a central processing unit (CPU) or an application processor (AP)), and an auxiliary processor 423 (e.g., a graphics processing unit (GPU), an image signal processor (ISP), a sensor hub processor, or a communication processor (CP)) that is operable independently from, or in conjunction with, the main processor 421. Additionally or alternatively, the auxiliary processor 423 may be adapted to consume less power than the main processor 421, or execute a particular function. The auxiliary processor 423 may be implemented as being separate from, or a part of, the main processor 421.

The auxiliary processor 423 may control at least some of the functions or states related to at least one component (e.g., the display device 460, the sensor module 476, or the communication module 490) among the components of the electronic device 401, instead of the main processor 421 while the main processor 421 is in an inactive (e.g., sleep) state, or together with the main processor 421 while the main processor 421 is in an active state (e.g., executing an application). The auxiliary processor 423 (e.g., an image signal processor or a communication processor) may be implemented as part of another component (e.g., the camera module 480 or the communication module 490) functionally related to the auxiliary processor 423.

The memory 430 may store various data used by at least one component (e.g., the processor 420 or the sensor module 476) of the electronic device 401. The various data may include, for example, software (e.g., the program 440) and input data or output data for a command related thereto. The memory 430 may include the volatile memory 432 or the non-volatile memory 434. Non-volatile memory 434 may include internal memory 436 and/or external memory 438.

The program 440 may be stored in the memory 430 as software, and may include, for example, an operating system (OS) 442, middleware 444, or an application 446.

The input device 450 may receive a command or data to be used by another component (e.g., the processor 420) of the electronic device 401, from the outside (e.g., a user) of the electronic device 401. The input device 450 may include, for example, a microphone, a mouse, or a keyboard.

The sound output device 455 may output sound signals to the outside of the electronic device 401. The sound output device 455 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 460 may visually provide information to the outside (e.g., a user) of the electronic device 401. The display device 460 may include, for example, a display, a hologram device, or a projector and control circuitry to control a corresponding one of the display, hologram device, and projector. The display device 460 may include touch circuitry adapted to detect a touch, or sensor circuitry (e.g., a pressure sensor) adapted to measure the intensity of force incurred by the touch.

The audio module 470 may convert a sound into an electrical signal and vice versa. The audio module 470 may obtain the sound via the input device 450 or output the sound via the sound output device 455 or a headphone of an external electronic device 402 directly (e.g., wired) or wirelessly coupled with the electronic device 401.

The sensor module 476 may detect an operational state (e.g., power or temperature) of the electronic device 401 or an environmental state (e.g., a state of a user) external to the electronic device 401, and then generate an electrical signal or data value corresponding to the detected state. The sensor module 476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 477 may support one or more specified protocols to be used for the electronic device 401 to be coupled with the external electronic device 402 directly (e.g., wired) or wirelessly. The interface 477 may include, for example, a high- definition multimedia interface (HDMI), a universal serial bus (USB) interface, a secure digital (SD) card interface, or an audio interface.

A connecting terminal 478 may include a connector via which the electronic device 401 may be physically connected with the external electronic device 402. The connecting terminal 478 may include, for example, an HDMI connector, a USB connector, an SD card connector, or an audio connector (e.g., a headphone connector).

The haptic module 479 may convert an electrical signal into a mechanical stimulus (e.g., a vibration or a movement) or an electrical stimulus which may be recognized by a user via tactile sensation or kinesthetic sensation. The haptic module 479 may include, for example, a motor, a piezoelectric element, or an electrical stimulator.

The camera module 480 may capture a still image or moving images. The camera module 480 may include one or more lenses, image sensors, image signal processors, or flashes. The power management module 488 may manage power supplied to the electronic device 401. The power management module 488 may be implemented as at least part of, for example, a power management integrated circuit (PMIC).

The battery 489 may supply power to at least one component of the electronic device 401. The battery 489 may include, for example, a primary cell which is not rechargeable, a secondary cell which is rechargeable, or a fuel cell.

The communication module 490 may support establishing a direct (e.g., wired) communication channel or a wireless communication channel between the electronic device 401 and the external electronic device (e.g., the electronic device 402, the electronic device 404, or the server 408) and performing communication via the established communication channel. The communication module 490 may include one or more communication processors that are operable independently from the processor 420 (e.g., the AP) and supports a direct (e.g., wired) communication or a wireless communication. The communication module 490 may include a wireless communication module 492 (e.g., a cellular communication module, a short-range wireless communication module, or a global navigation satellite system (GNSS) communication module) or a wired communication module 494 (e.g., a local area network (LAN) communication module or a power line communication (PLC) module). A corresponding one of these communication modules may communicate with the external electronic device via the first network 498 (e.g., a short-range communication network, such as BLUETOOTH^{™}, wireless-fidelity (Wi-Fi) direct, or a standard of the Infrared Data Association (IrDA)) or the second network 499 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 492 may identify and authenticate the electronic device 401 in a communication network, such as the first network 498 or the second network 499, using subscriber information (e.g., international mobile subscriber identity (IMSI)) stored in the subscriber identification module 496.

The antenna module 497 may transmit or receive a signal or power to or from the outside (e.g., the external electronic device) of the electronic device 401. The antenna module 497 may include one or more antennas, and, therefrom, at least one antenna appropriate for a communication scheme used in the communication network, such as the first network 498 or the second network 499, may be selected, for example, by the communication module 490 (e.g., the wireless communication module 492). The signal or the power may then be transmitted or received between the communication module 490 and the external electronic device via the selected at least one antenna.

Commands or data may be transmitted or received between the electronic device 401 and the external electronic device 404 via the server 408 coupled with the second network 499. Each of the electronic devices 402 and 404 may be a device of a same type as, or a different type, from the electronic device 401. All or some of operations to be executed at the electronic device 401 may be executed at one or more of the external electronic devices 402, 404, or 408. For example, if the electronic device 401 should perform a function or a service automatically, or in response to a request from a user or another device, the electronic device 401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 401. The electronic device 401 may provide the outcome, with or without further processing of the outcome, as at least part of a reply to the request. To that end, a cloud computing, distributed computing, or client-server computing technology may be used, for example.

In the context of the embodiments described above with reference to FIGS. 1-3, the method of processing a wireless communication frame including an IFCS may be executed by one or more components of the electronic device 401 illustrated in FIG. 4. For example, the processor 420, which may include a communication processor (CP) or a processing circuit within the communication module 490, may implement the control logic configured to perform the steps of detecting, determining, and verifying the IFCS as described in connection with FIG. 3. The communication module 490, together with the antenna module 497, may provide the PHY and MAC functionality necessary to receive a wireless communication frame from another device (e.g., an AP or another station) and to supply frame portions to the processor 420 for IFCS-related processing. In this regard, the processor 420 and communication module 490 collectively constitute the hardware and firmware configured to execute the inventive method of FIG. 3.

In some embodiments, at least a portion of the logic for performing the IFCS-related processing may be implemented in dedicated hardware (e.g., in a modem circuit, MAC controller, or PHY chipset) of the communication module 490, while another portion may be embodied as software instructions executed by the processor 420 or auxiliary processor 423. When embodied in hardware, the functions disclosed herein may be realized as circuitry within a SoC or integrated communication controller of the electronic device 401. When embodied in software, the corresponding instructions may be stored in the memory 430 (e.g., non-volatile memory 434) and executed by the processor 420 to perform operations corresponding to the flow illustrated in FIG. 3. Thus, the electronic device 401 shown in FIG. 4 provides an example of a hardware platform configured to carry out the method described in the preceding figures.

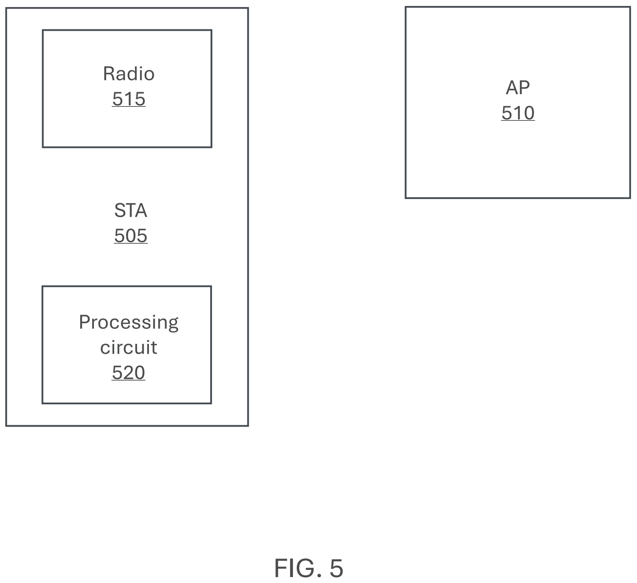

FIG. 5 shows a system including a STA 505 and an AP 510, in communication with each other. The STA may include a radio 515 and a processing circuit (or a means for processing) 520, which may perform various methods disclosed herein, e.g., the method illustrated in FIG. 1. For example, the processing circuit 520 may receive, via the radio 515, transmissions from the AP 510, and the processing circuit 520 may transmit, via the radio 515, signals to the AP 510.

The system of FIG. 5 provides an example implementation environment for the embodiments described in FIGS. 1-4. In particular, the STA 505 may correspond to the electronic device 401 of FIG. 4 and may execute the method of processing a wireless communication frame including an IFCS as illustrated in FIG. 3. The processing circuit 520, which may include a communication processor or controller integrated within the STA 505, can perform the detecting, determining, and verifying operations based on information contained in User Info fields of the received frame. The radio 515 may provide the PHY interface for receiving and transmitting the frames, while the AP 510 may function as a transmitting device that generates and sends the frames containing IFCS information. Accordingly, the system shown in FIG. 5 exemplifies a practical wireless link in which the frame-processing method disclosed herein may be realized in hardware and software within the STA 505 and the AP 510. In some embodiments, the AP 510 may further include logic or circuitry configured to construct a frame including an IFCS indicator and corresponding location information in one or more User Info fields, thereby enabling compatible receiving devices, such as the STA 505, to perform early or segmented integrity verification as described above.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications within the scope of the following claims.

## Claims

1. A method of processing a frame in a wireless communication device, the method comprising:
receiving (301), by the wireless communication device, the frame, the frame including a first user information field;
detecting (302), by the wireless communication device and based on information contained in the first user information field, whether the frame includes an intermediate frame check sequence, IFCS, and whether location information for the IFCS is available;
when the location information for the IFCS is available, determining (304), by the wireless communication device and based on the location information contained in a user information field following a common information field of the frame, a position of one or more additional user information fields that include the IFCS;
when the location information for the IFCS is available, verifying (306), by the wireless communication device, the IFCS based on the one or more additional user information fields; and
based on a result of the verifying, performing further processing of the frame or discarding the frame.

2. The method of claim 1, wherein the information contained in the first user information field comprises an association identifier, AID, value.

3. The method of claim 2, wherein the AID value identifies at least one of whether the IFCS is included immediately after the common information field of the frame or whether the IFCS is included in a later portion of the frame following one or more user information fields.

4. The method of any one of claims 1 to 3, wherein the location information contained in the first user information field includes an offset indicating a position of the user information field that carries the IFCS.

5. The method of any one of claims 1 to 4, wherein verifying the IFCS includes computing a check value for a portion of the frame and comparing the check value with the IFCS included in the one or more additional user information fields.

6. The method of claim 5, wherein computing the check value excludes the one or more user information fields that include the IFCS from a cyclic-redundancy-check, CRC, calculation for the frame.

7. The method of any one of claims 1 to 6, further comprising, when the information contained in the first user information field does not indicate the location of the IFCS, processing, by the wireless communication device, the frame without IFCS verification.

8. The method of any one of claims 1 to 7, wherein the wireless communication device includes a station, STA (505).

9. A wireless communication device comprising:
a receiver configured to receive a frame (100, 200), the frame (100, 200) including a first user information field; and
a controller (420, 520) configured to:
detect, based on information contained in the first user information field, whether the frame (100, 200) includes an intermediate frame check sequence, IFCS,
determine, based on location information contained in the first user information field, a position of one or more additional user information fields that include the IFCS, and
verify the IFCS based on the one or more additional user information fields.

10. The wireless communication device of claim 9, wherein the information contained in the first user information field comprises an association identifier, AID, value.

11. The wireless communication device of claim 10, wherein the AID value identifies whether the IFCS is included immediately after a common information field of the frame (100, 200) or in a later portion of the frame (100, 200) following one or more user information fields.

12. The wireless communication device of any one of claims 9 to 11, wherein the location information contained in the first user information field includes an offset indicating a position of a user information field that carries the IFCS.

13. The wireless communication device of any one of claims 9 to 12, wherein the controller (420, 520) is further configured to compute a check value for a portion of the frame (100, 200) and compare the check value with the IFCS included in the one or more additional user information fields.

14. The wireless communication device of claim 13, wherein computing the check value excludes the one or more user information fields that include the IFCS from a cyclic-redundancy-check, CRC, calculation for the frame (100, 200).

15. The wireless communication device of any one of claims 9 to 14, wherein the first user information field is positioned immediately after a common information field of the frame (100, 200).
